# EUROPÄISCHE PATENTANMELDUNG

(11) **EP 4 685 478 A1**
(43) Veröffentlichungstag der Anmeldung: **28.01.2026**
(21) Anmeldenummer: 24190057.0
(22) Anmeldetag: 22.07.2024
(51) Int. Cl.: G01N 30/60, B25B 13/00, F16B 23/00

(54) **AUFSATZ FÜR HPLC-KAPILLARENSCHRAUBKOPF**

(71) Anmelder: F. Hoffmann-La Roche AG, 4070 Basel (CH)
(72) Erfinder: EYBEL, Florian, 82377 Penzberg (DE); RAINER, Tobias, 82377 Penzberg (DE)
(74) Vertreter: Vossius & Partner Patentanwälte Rechtsanwälte mbB

(57) **Zusammenfassung**

Die vorliegende Erfindung betrifft einen Aufsatz für einen HPLC-Kapillarenschraubkopf, wobei der Aufsatz dafür konfiguriert ist, ein Drehmoment von einem Drehmomentwerkzeug auf den HPLC-Kapillarenschraubkopf zu übertragen, wobei der HPLC-Kapillarenschraubkopf auf einer HPLC-Kapillare sitzt.

## Beschreibung

Die vorliegende Erfindung betrifft einen Aufsatz für einen HPLC-Kapillarenschraubkopf.

Dieser Aufsatz dient zur fachgerechten Installation von Kapillaren für die Hochleistungsflüssigkeitschromatographie (HPLC), insbesondere von Thermo(OR) Viper^{™} und nanoViper^{™} Kapillaren.

In der Hochleistungsflüssigkeitschromatographie (HPLC) werden HPLC-Kapillaren, im Folgenden auch nur kurz *"*Kapillaren*"* genannt, verwendet, um Flüssigkeiten zu transportieren, bspw. in eine HPLC-Säule hinein, oder aus einer HPLC-Säule heraus. Zur Befestigung einer solchen Kapillare an ihrem Bestimmungsort, weist die Kapillare ein sogenanntes Fitting mit einem HPLC-Kapillarenschraubkopf auf, der auf der Kapillare sitzt und der mit einem Gegenstück am Bestimmungsort verschraubt wird. Durch das Verschrauben wird ein Dichtungselement des Fittings, bspw. ein O-Ring, der bspw. am Ende der Kapillare und des Fittings sitzt, zusammengepresst, um die nötige Dichtigkeit für den Betrieb der HPLC zu gewährleisten. Hierzu ist das Ende der Kapillare, also der entsprechende Teil des Fittings, in der Regel relativ stabil ausgebildet, etwa als metallisches Endstück und/oder als Stempel. Das Gegenstück zum Fitting wird auch "Port" genannt.

Die Kapillaren dürfen nur bis zu einem bestimmten Drehmoment angezogen werden, um das System nicht zu beschädigen bzw. eine entsprechende Dichtigkeit zu erreichen. Dazu werden - den Herstellerangaben folgend - die Kapillaren per Hand, lediglich handfest angezogen. Hierzu wird teilweise herstellerseitig ein auf den Kapillarenschraubkopf aufsteckbarer Griff angeboten, der das händische Anziehen des HPLC-Kapillarenschraubkopfes dadurch erleichtern soll, dass er besser gegriffen werden kann als der Kapillarenschraubkopf selbst. Nur das korrekte handfeste Anpressen des Dichtungselements (wie bspw. O-Ring aus PEEK und/oder anderen Kunststoffen) mittels des HPLC-Kapillarenschraubkopfes an den Port eines Ventils, einer HPLC-Trennsäule oder einer anderen Kapillare stellt die Dichtigkeit her, die bis zu 1000 Bar oder sogar 1500 bar aushalten soll.

In der Praxis ist häufig zu beobachten, dass die Kapillaren nicht fachgerecht installiert werden, bspw. zu lasch angezogen werden und deshalb nicht richtig dichten. Die Anwender ziehen im Nachgang häufig mit zu großer Kraft an und beschädigen dabei die Dichtung: das Dichtelement wird beschädigt und wird undicht und/oder löst sich. Im schlimmsten Fall wird dadurch zusätzlich der Port des Installations-Ortes durch das kaputte Dichtelement verstopft. Dadurch werden die Kapillaren und ggf. das Bauteil mit dem Installations-Ort, an dem die Kapillare angeschlossen war, bspw. eine HPLC-Säule oder ein Ventil, unbrauchbar und müssen ersetzt werden, was Ressourcen und finanzielle Mittel belastet.

Aufgabe der vorliegenden Erfindung ist es, die vorgenannten Probleme wenigstens teilweise zu beheben. Die Erfindung ist definiert durch die Ansprüche, wobei die abhängigen Ansprüche bevorzugte Ausführungsformen sind.

Die vorliegende Erfindung betrifft in einem ersten Aspekt einen Aufsatz für einen HPLC-Kapillarenschraubkopf, wobei der Aufsatz dafür konfiguriert ist, ein Drehmoment von einem Drehmomentwerkzeug auf den HPLC-Kapillarenschraubkopf zu übertragen, wobei der HPLC-Kapillarenschraubkopf auf einer HPLC-Kapillare sitzt.

Ein *"Drehmomentwerkzeug"* bezeichnet ein Werkzeug wie Drehmomentschraubendreher oder Drehmomentschlüssel, mit dem ein definiertes Anzugsmoment auf ein Verbindungselement, wie etwa eine Schraube, ausgeübt werden und/oder dessen Erreichen und/oder Überschreiten angezeigt werden kann. Es kann sich um ein anzeigendes Drehmomentwerkzeug oder ein auslösendes Drehmomentwerkzeug handeln. Das Drehmomentwerkzeug kann eine Klinge, eine Bit, einen Adapter, oder Ähnliches aufweisen.

Als *"Drehmomentfunktion"* wird die Funktion bezeichnet, ein definiertes Anzugsmoment auf ein Verbindungselement, wie etwa eine Schraube, auszuüben und/oder dessen Erreichen und/oder Überschreiten anzuzeigen. Drehmomentwerkzeuge haben also eine Drehmomentfunktion.

*"HPLC"* ist, wie bereits erwähnt, die Abkürzung für Hochleistungsflüssigkeitschromatographie.

Eine *"HPLC-Kapillare"* ist eine Leitung zur Verwendung in einem HPLC-System. Typische Spezifikationen sind: Innendurchmesser: 10-500 µm; Außendurchmesser: 300 µm - 1,3 mm; Länge: 50 mm - 200 cm; Material: Metall oder Kunststoff und Kombinationen davon, bspw. PEEK, Stainless Steel, Fused Silica, Fused Silica mit Peek Sleeve, Fused Silica coated with polyimide, Stainless steel mit Peek inlay, Stainless steel mit polymeric inlay.

Ein *"HPLC-Kapillarenschraubkopf"* ist ein Teil des HPLC-Fittings, nämlich ein Verbindungselement, das auf der HPLC-Kapillare sitzt und mit dem die HPLC-Kapillare an ein passendes Gegenstück, bspw. den Port eines Ventils, einer HPLC-Trennsäule oder einer anderen Kapillare, angeschlossen werden kann. Durch Verschrauben des HPLC-Kapillarenschraubkopfs mit seinem Gegenstück wird die nötige Klemmkraft erzeugt, um die Dichtigkeit bei Betriebsdruck herzustellen, was bspw. 1000 Bar oder 1500 bar sein können. Zur Gewährleistung der Dichtigkeit weist der HPLC-Kapillarenschraubkopf und/oder sein Gegenstück vorzugsweise einen Dichtungsring auf, der durch die Klemmkraft zwischen dem HPLC-Kapillarenschraubkopf und dessen Gegenstück geklemmt wird. Typische Spezifikationen eines HPLC-Fittings sind: Schraubkopf mit 10-32 UNF (2A oder 2B) Gewinde mit 4-10 Gewindegängen (d.h. Gewinde-Außendurchmesser: ca. 3/16" (0,19"); am distalen Ende konisch zulaufend und übergehend in 1/16 Stempel (Ferrule), ca. 4,5 mm StempelLänge mit PEEK-Dichtung (ca. 1 mm Länge zusätzlich zu den 4,5 mm Stempellänge) am distalen Ende; HPLC-Fitting-Länge:5-30 mm; Material: Metall, bspw. rostfreier Stahl, Kunststoff, bspw. PEEK Kunststoff, und/oder Glas- und/oder Kohlefaser verstärkter Kunststoff, sowie Kombinationen. Häufig sitzt der HPLC-Schraubkopf so auf der Kapillare, dass die Kapillare entlang einer zentralen Längsachse des Schraubkopfes durch den HPLC-Schraubkopf hindurch verläuft.

Der Aufsatz kann ein erstes Eingriffselement aufweisen, das dafür konfiguriert ist, mit einem kompatiblen zweiten Eingriffselement des HPLC-Kapillarenschraubkopfs in Eingriff zu treten und, in Eingriff stehend, das Drehmoment zu übertragen. Bei dem ersten und zweiten Eingriffselement kann es sich um Eingriffselemente handeln, die einem Industriestandard und/oder einer Industrienorm entsprechen. Alternativ kann es sich um Eingriffselemente handeln, die keinem Industriestandard und/oder keiner Industrienorm entsprechen. Das zweite Eingriffselement kann herstellerseitig bereitgestellt sein und/oder konfiguriert sein zum Festziehen des HPLC-Kapillarenschraubkopfes an einem kompatiblen Gegenstück mittels eines Griffs zum Festziehen per Hand, bspw. wie eingangs beschrieben.

Der Aufsatz kann ein drittes Eingriffselement aufweisen, das dafür konfiguriert ist, mit einem kompatiblen vierten Eingriffselement des Drehmomentwerkzeugs in Eingriff zu treten und, in Eingriff stehend, das Drehmoment zu übertragen. Bei dem dritten und vierten Eingriffselement kann es sich vorzugweise um Eingriffselemente handeln, die einem Industriestandard und/oder einer Industrienorm entsprechen. Alternativ kann es sich um Eingriffselemente handeln, die keinem Industriestandard und/oder keiner Industrienorm entsprechen. Das vierte Eingriffselement des Drehmomentwerkzeugs kann Teil einer Klinge, eines Bits, einer Nuss, oder Ähnlichem sein.

Der Aufsatz ist vorzugsweise dafür konfiguriert, die HPLC-Kapillare so zu leiten, dass der Eingriff zwischen dem dritten und dem vierten Eingriffselement möglich ist und/oder der Eingriff zwischen dem ersten und dem zweiten Eingriffselement möglich ist.

Der Aufsatz kann eine Durchführungsöffnung, bspw. eine seitliche Öffnung, aufweisen, die dafür konfiguriert ist, die HPLC-Kapillare so zu leiten, dass der Eingriff zwischen dem dritten und dem vierten Eingriffselement möglich ist und/oder der Eingriff zwischen dem ersten und dem zweiten Eingriffselement möglich ist.

Vorzugsweise weist das erste Eingriffselement einen Abschnitt der Durchführungsöffnung auf.

Das erste Eingriffselement kann ein männliches Eingriffselement sein. Das erste Eingriffselement kann eine Basis am restlichen Aufsatz aufweisen, wobei sich das Eingriffselement von der Basis aus vom restlichen Aufsatz wegerstreckt.

Das erste Eingriffselement, welches Bestandteil des erfindungsgemäßen Aufsatzes ist, kann mehrere Eingriffselementabschnitte aufweisen, wobei die Eingriffselementabschnitte um den Abschnitt der Durchgangsöffnung angeordnet sein können.

Das zweite Eingriffselement, welches Bestandteil des HPLC-Kapillarenschraubkopfs ist oder auf diesen aufgesetzt ist, kann von einem Außenumfang des HPLC-Kapillarenschraubkopfes beabstandet sein und/oder ein weibliches Eingriffselement sein. Das zweite Eingriffselement kann eine Vertiefung und/oder eine Durchgangsöffnung in dem HPLC-Kapillarenschraubkopfsein.

Der Aufsatz kann sich von einer proximalen Seite, die das dritte Eingriffselement aufweist, zu einer distalen Seite, die das erste Eingriffselement aufweist, erstrecken.

Vorzugsweise ist das erste Eingriffselement von einem Außenumfang der distalen Seite beabstandet.

Die Begriffe "proximal" und "distal" sind Orts- und/oder Richtungsangaben bezogen auf den Anwender. Als "proximal" wird etwas bezeichnet, das beim Vorgang des Anschraubens der HPLC-Kapillare mit dem HPLC-Schraubkopfe an einen Installationsort näher am Anwender ist, als etwas, das als "distal" bezeichnet wird.

Der Aufsatz kann jedwede geeignete Form und Größe haben. Beispielsweise kann der Aufsatz eine im Wesentlichen zylindrische Grundform mit einer Grundfläche, einer Deckfläche und einem Mantel, der sich von der Grundfläche zur Deckfläche erstreckt, haben, wobei die Grundfläche der proximalen Seite entspricht und die Deckfläche der distalen Seite entspricht, und wobei sich die Durchführungsöffnung von einer mittigen Position auf der distalen Seite durch den Mantel erstreckt.

Als *"Zylindrische* Grundform*"* wird die Form eines allgemeinen Zylinders angesehen. Ein allgemeiner Zylinder kann schief sein, und/oder eine beliebig geformte Grundfläche und/oder Deckenfläche haben, und/oder schräg abgeschnitten sein. Beispielsweise fallen ein gerader Zylinder, ein schiefer Zylinder, und ein Kegelstumpf darunter.

*"Im Wesentlichen zylindrische Form":* kann eine zylindrische Form mit gewissen Abweichungen, die jedoch den Gesamteindruck nicht stören, bspw. eine Oberflächenstruktur aus Rillen und/oder Dellen und/oder Erhebungen beschreiben. Kann alternativ oder zusätzlich Abweichungen von bis zu 10% von der zylindrischen Form inkludieren. Mantel, Grundfläche und/oder Deckfläche können strukturiert und/oder gewölbt sein.

Wenn der Aufsatz als Zylinder mit kreisförmiger Grundfläche und Deckfläche ausgeführt ist, so kann er einen Radius von mindestens 3,5 mm und/oder maximal 10 mm haben. Bevorzugt ist der Radius zwischen 6 mm und 7 mm. Die Höhe des Zylinders kann mindestens 12 mm, betragen, bevorzugt 25 mm.

Der Aufsatz kann als Quader ausgeführt sein, wobei dies einem geraden Zylinder mit rechteckiger, bspw. quadratischer, Grundfläche und Deckfläche entspricht. Eine Seitenlänge der Grundfläche und/oder der Deckfläche kann mindestens 7 mm und/oder maximal 20 mm betragen, bevorzugt zwischen 12 und 15 mm. Der Durchmesser der Grundfläche kann von Kante zu Kante zwischen 7 mm und 20 mm betragen. Die Höhe des rechteckigen Zylinders kann mindestens 12 mm betragen, bevorzugt 25 mm.

Der Aufsatz kann als gerader Zylinder mit sechseckiger Grundfläche und Deckfläche ausgeführt sein. Eine Seitenlänge der Grundfläche und/oder der Deckfläche kann mindestens 3,5 mm und/oder maximal 10 mm betragen. Der Durchmesser der Grundfläche kann von Kante zu gegenüberliegender Kante 7 mm bis 20 mm betragen. Die Höhe des Sechskant-Zylinders kann mindestens 12 mm betragen, bevorzugt 25 mm.

Der Aufsatz kann als gerader Zylinder mit achteckiger Grundfläche und Deckfläche ausgeführt sein. Eine Seitenlänge der Grundfläche und/oder der Deckfläche kann mindestens 2,9 mm und/oder maximal 8,5 mm betragen. Der Durchmesser der Grundfläche kann von Kante zu gegenüberliegender Kante 7 mm bis 20 mm betragen. Die Höhe des Achtkant-Zylinders kann mindestens 12 mm betragen, bevorzugt 25 mm.

Die Durchführungsöffnung ist vorzugsweise so dimensioniert, dass die HPLC-Kapillare funktionserhaltend durch die Durchführungsöffnung geführt werden kann, dass also bspw. kein Knick in der Kapillare entsteht. Vorzugsweise hat die Durchführungsöffnung eine Länge von mindestens 10 mm. Die Durchführungsöffnung kann eine Biegung aufweisen, wobei die Biegung vorzugsweise einen Radius von mindestens 4 mm, stärker bevorzugt mindestens 5 mm, besonders bevorzugt von 6 mm hat. Die Durchführungsöffnung kann einen Durchmesser von mindestens 350 µm und/oder bis zu 2 mm haben, bevorzugt 1,5 mm. Die Durchführungsöffnung kann eine Tiefe haben, die dem halben Durchmesser des Aufsatzes plus dem halben Durchmesser der Kapillare entspricht.

*Tiefe:* Kann gemessen werden von der Oberfläche des Aufsatzes zum Boden der Durchführungsöffnung, bspw. von der lateralen Oberfläche des Sechskant-Eingriffselements zur gegenüberliegenden Wand des Schlitzes (also dem Boden).

*laterale Oberfläche des Sechskant-Eingriffselements:* entspricht der Mantelfläche des Sechskantzylinders.

Die Durchführungsöffnung kann dafür konfiguriert sein, einen Kapillarenabschnitt von mindestens 10 mm Länge zu beherbergen. Die Durchgangsöffnung kann eine Länge von mindestens 10 mm aufweisen, wobei die Länge gemessen wird als kürzeste Verbindung entlang einer Wand der Durchgangsöffnung von einer Öffnung am distalen Ende des ersten Eingriffselements zu einer Öffnung im Mantel. Die Durchgangsöffnung kann eine Breite von mindestens 350 µm, mindestenst 400 µm, oder mindestens 500 µm haben, wobei die Breite senkrecht zu einer Längsachse, bevorzugt einer zentralen Längsachse, des Aufsatzes und senkrecht zur Tiefenrichtung gemessen wird.

Das erste Eingriffselement kann ein männliches Sechskant-Eingriffselement sein.

Das erste Eingriffselement kann eines der folgenden sein:
- 5/16 Zoll-Hex-Eingriffselement;
- 1/4 Zoll-Hex-Eingriffselement.

Der Abschnitt der Durchführungsöffnung, den das erste Eingriffselement aufweist, kann als Schlitz ausgebildet sein, der sich von einer lateralen Oberfläche des ersten Eingriffselements in Richtung zur Mittelachse des ersten Eingriffselements und optional bis zur Mittelachse des ersten Eingriffselements und/oder darüber hinaus erstreckt, bevorzugt bis zur Mittelachse plus dem halben Durchmesser der Kapillare.

Der Abschnitt der Durchführungsöffnung, den das erste Eingriffselement aufweist, kann als Schlitz ausgebildet sein, der sich von einer lateralen Oberfläche des Sechskant-Eingriffselements zur Mittelachse des Sechskant-Eingriffselements und darüber hinaus erstreckt, bevorzugt bis zur Mittelachse plus dem halben Durchmesser der Kapillare.

Die Durchführungsöffnung kann einen Abschnitt aufweisen, der sich durch einen vom ersten Eingriffselement verschiedenen Abschnitt des Aufsatzes erstreckt.

Das dritte Eingriffselement kann ein weibliches Eingriffselement sein. Das dritte Eingriffselement kann eine Vertiefung und/oder eine Durchgangsöffnung in dem Aufsatz sein.

Das vierte Eingriffselement kann ein männliches Eingriffselement sein.

Das dritte Eingriffselement kann ein standardisiertes Eingriffselement sein und/oder dafür konfiguriert sein, mit einem der folgenden vierten Eingriffselemente in Eingriff zu treten:
- ein 1/4 Zoll Innen-Vierkant
- ein 1/4 Zoll Außen-Vierkant
- ein 1/2 Zoll Innen-Vierkant
- ein 1/2 Zoll Außen-Vierkant
- ein 3/8 Zoll Innen-Vierkant
- ein 3/8 Zoll Außen-Vierkant
- ein 5/16 Zoll Innen-Vierkant
- ein 5/16 Zoll Außen-Vierkant
- ein 4-14 mm Innen-Sechskant
- ein 4-14 mm Außen-Sechskant
- ein 4-14 mm Innen-Achtkant
- ein 4-14 mm Außen-Achtkant
- ein 4-14 mm Innen-Zehnkant
- ein 4-14 mm Außen-Zehnkant
- ein 4-14 mm Innen-Zwölfkant
- ein 4-14 mm Außen-Zwölfkant
- Außen-Torx (E-Nuss)
- Innen-Torx (E-Nuss)
- ein Gewinde ;
- das vierte Eingriffselement ist Teil einer Klinge eines Drehmomentschraubendrehers;
- das vierte Eingriffselement ist Teil eines Drehmomentschraubendrehers ohne eine Klinge, d.h. Teil eines Drehmomentschraubendrehergriffs mit Drehmomentfunktion, wie z.B. eine Bit-Aufnahme ¼ Zoll

Das dritte Eingriffselement kann eines der folgenden Eingriffselemente sein:
- ein 1/4 Zoll Innen-Vierkant
- ein 1/4 Zoll Außen-Vierkant
- ein 1/2 Zoll Innen-Vierkant
- ein 1/2 Zoll Außen-Vierkant
- ein 3/8 Zoll Innen-Vierkant
- ein 3/8 Zoll Außen-Vierkant
- ein 5/16 Zoll Innen-Vierkant
- ein 5/16 Zoll Außen-Vierkant
- ein 4-14 mm Innen-Sechskant
- ein 4-14 mm Außen-Sechskant
- ein 4-14 mm Innen-Achtkant
- ein 4-14 mm Außen-Achtkant
- ein 4-14 mm Innen-Zehnkant
- ein 4-14 mm Außen-Zehnkant
- ein 4-14 mm Innen-Zwölfkant
- ein 4-14 mm Außen-Zwölfkant
- Außen-Torx (E-Nuss)
- Innen-Torx (E-Nuss)
- ein Gewinde, bevorzugt mit einer Windung in gleicher Richtung zum Gewinde des HPLC-Kapillarenschraubkopfes;
- das dritte Eingriffselement ist Teil einer Klinge, die für den Eingriff mit einem Drehmomentschraubendrehergriff mit Drehmomentfunktion konfiguriert ist.

Der Aufsatz kann eine Länge über den gesamten Körper von mindestens 17 mm aufweisen. Alternativ oder zusätzlich kann der Aufsatz eine Länge über den gesamten Körper von maximal 1000 mm, maximal 500 mm, maximal 300 mm, maximal 200 mm, oder maximal 100 mm, oder jeden Wert in 1 mm Schritten zwischen 1000 mm und 17 mm aufweisen. Es sind auch längere Aufsätze möglich. Bevorzugt hat der Aufsatz eine Länge von 25 mm bis 35 mm, ganz bevorzugt etwa 30 mm.

Der Aufsatz kann einen Magneten aufweisen und/oder magnetisch sein. Dadurch kann das in Eingriff Bringen mit dem Drehmomentwerkzeug und/oder dem HPLC-Kapillarenschraubkopf erleichtert werden.

Zum Anziehen der Kapillare mittels des daran befestigten Kapillarschraubkopfes an einem kompatiblen Gegenstück ist vorgesehen, dass der erfindungsgemäße Aufsatz mit einem handelsüblichen Drehmomentwerkzeug, bspw. einem Drehmomentschraubendreher, und mit dem Kapillarschraubkopf in Eingriff gebracht wird. Das richtige Anzugs-Drehmoment, bspw. etwa 0,15-0,25 Nm, wird im Drehmomentwerkzeug voreingestellt und der Anwender muss lediglich anziehen. Ist das richtige Anzugs-Drehmoment erreich, dreht das Drehmomentwerkzeug durch bzw. zeigt das Erreichen des Drehmoments an und der Anwender kann das Anziehen stoppen.

Der Aufsatz ermöglicht die fachgerechte Installation mittels eines vordefinierten Drehmomentes, bspw. etwa 0,15-0,25 Nm, und verhindert so sowohl das zu schwache als auch das zu starke Anziehen der Kapillaren.

Die vorliegende Erfindung ermöglicht die Installation der HPLC-Kapillaren in vorgesehener Weise, nicht zu fest und nicht zu locker. Dadurch wird eine Beschädigung der Kapillaren, der Schraubköpfe und der Gegenstücke vermieden. Zudem schonen die Anwender ihre Finger, denn die Montage der Kapillaren/Fittings belastet die Haut und kann zu schmerzenden Fingern führen, wenn mehrere Kapillaren kurz hintereinander getauscht werden.

Gemäß einem zweiten Aspekt betrifft die Erfindung einen Aufsatz wie vorstehend beschrieben und mit integrierter Drehmomentfunktion. Hierbei kann die Drehmomentfunktion in jeder angemessenen Art und Weise implementiert sein.

Zur Verwendung der Erfindung gemäß dem zweiten Aspekt kann der Aufsatz dafür konfiguriert sein, mit einem Werkzeug zur Ausübung eines Drehmoments in Eingriff gebracht zu werden, bspw. einem herkömmlichen, kompatiblen Schraubendreher. Mit anderen Worten kann statt des Drehmomentwerkzeugs ein Werkzeug ohne Drehmomentfunktion verwendet werden.

Gemäß einem dritten Aspekt betrifft die vorliegende Erfindung ein Set, das aufweist:
- einen Aufsatz wie vorstehend beschrieben; und
- ein kompatibles Drehmomentwerkzeug.

Gemäß einem vierten Aspekt betrifft die Erfindung ein Drehmomentwerkzeug, vorzugsweise einen Drehmomentschraubendreher, mit integriertem Aufsatz wie vorstehend beschrieben.

Gemäß einem fünften Aspekt betrifft die Erfindung ein Verfahren zum Montieren einer HPLC-Kapillare mit einem HPLC-Kapillarenschraubkopf mittels eines kompatiblen Aufsatzes nach einem der vorhergehenden Ansprüche an einem zum HPLC-Kapillarenschraubkopf kompatiblen Gegenstück, das folgende Schritte aufweist:
- Aufsetzen des Aufsatzes auf den HPLC-Kapillarenschraubkopf;
- Aufsetzen eines Drehmomentwerkzeugs auf den Aufsatz;
- Optional Ansetzen des HPLC-Kapillarenschraubkopfs an den kompatiblen Port;
- Anziehen des HPLC-Kapillarenschraubkopfes, wobei während des Anziehens ein vorgesehenes Anzugsmoment im Drehmomentwerkzeug eingestellt ist.

Das Anziehen des HPLC-Kapillarenschraubkopfes kann dadurch erfolgen, dass der Anwender mit der Hand ein Drehmoment auf das Drehmomentwerkzeug ausübt, welches das Drehmoment über den Aufsatz an den HPLC-Kapillarenschraubkopfe überträgt.

Das Verfahren kann den Schritt aufweisen:
- Einstellen eines Soll-Drehmoments im Drehmomentwerkzeug.

Falls es sich um ein auslösendes Drehmomentwerkzeug handelt, stellt das Drehmomentwerkzeug automatisch sicher, dass das eingestellte Soll-Drehmoment nicht überschritten wird, indem es bei Überschreiten des eingestellten Soll-Drehmoments durchdreht.

Falls es sich um ein anzeigendes Drehmomentwerkzeug handelt, kann das Verfahren den zusätzlichen Schritt aufweisen:
- Beenden des Schrittes des Anziehens, wenn das Drehmomentwerkzeug ein Erreichen und/oder Überschreiten des eingestellten Soll-Drehmoments anzeigt.

Gemäß einem erfindungsgemäßen Verfahren werden folgende Schritte ausgeführt, um eine HPLC-Kapillare, auf der ein HPLC-Kapillarenschraubkopf sitzt, mittels des hierin beschriebenen Aufsatzes mit integrierter Drehmomentfunktion an einem mit dem HPLC-Kapillarenschraubkopf kompatiblen Port zu montieren:
- Aufsetzen des Aufsatzes mit integrierter Drehmomentfunktion auf den HPLC-Kapillarenschraubkopf;
- optional Aufsetzen eines Drehwerkzeugs, bspw. eines Schraubendrehers, auf den Aufsatz mit integrierter Drehmomentfunktion;
- optional Ansetzen des HPLC-Kapillarenschraubkopfs an den kompatiblen Port;
- Anziehen des HPLC-Kapillarenschraubkopfes, wobei während des Anziehens ein vorgesehenes Anzugsmoment im Aufsatz mit integrierter Drehmomentfunktion eingestellt ist.

Das Verfahren kann den Schritt aufweisen:
- Einstellen eines Soll-Drehmoments im Aufsatz mit integrierter Drehmomentfunktion.

Falls es sich um eine auslösende Drehmomentfunktion handelt, stellt diese automatisch sicher, dass das eingestellte Soll-Drehmoment nicht überschritten wird, indem der Aufsatz bei Überschreiten des eingestellten Soll-Drehmoments durchdreht.

Falls es sich um eine anzeigende Drehmomentfunktion handelt, kann das Verfahren den zusätzlichen Schritt aufweisen:
- Beenden des Schrittes des Anziehens, wenn der Aufsatz mit integrierter Drehmomentfunktion ein Erreichen und/oder Überschreiten des eingestellten Soll-Drehmoments anzeigt.

Die Vorteile des zweiten bis fünften Aspekts der Erfindung sind die selben, wie beim ersten Aspekt. Zusätzlich entfällt beim zweiten und vierten Aspekt der Erfindung das in Eingriff Bringen des Aufsatzes mit dem Drehmomentwerkzeug, was die Handhabung zusätzlich erleichtert und zu einer Zeitersparnis führt. Demgegenüber liegt ein Vorteil des ersten bzw. dritten Aspekts der Erfindung darin, dass das Drehmomentwerkzeug ein handelsübliches Standardwerkzeug sein kann.

Die in dieser Beschreibung genannten Quellen in ihrer Gesamtheit sowie die genannten Zitatstellen werden in die vorliegende Beschreibung mit aufgenommen.

Die Erfindung wird anhand der Figuren weiter erläutert. Alle Maßangaben in Figuren sind beispielhaft und, falls nicht anders angegeben, in Millimeter.
- Fig. 1: zeigt ein Beispiel einer kommerziell erhältlichen HPLC-Kapillare mit HPLC-Kapillarenschraubkopf in (a) lateraler Ansicht, und (b) in einer Schnitt-Ansicht entlang der zentralen Längsachse des Kapillarenschraubkopfes wie in Fig. 1a mit A angedeutet;
- Fig. 2: zeigt eine 3D-Ansicht einer Ausführungsform des erfindungsgemäßen Aufsatzes;
- Fig. 3: zeigt eine Ansicht auf die distale Seite der Ausführungsform des Aufsatzes aus Fig. 2;
- Fig. 4: zeigt eine Ansicht auf eine proximale Seite der Ausführungsform des Aufsatzes aus Fig. 2;
- Fig. 5: zeigt eine Ansicht auf eine laterale Seite der Ausführungsform des Aufsatzes aus Fig. 2;
- Fig. 6: zeigt eine Schnitt-Ansicht der Ausführungsform des Aufsatzes aus Fig. 5, Schnitt A;
- Fig. 7: zeigt die Ansichten aus den Fig. 3 (oben) und 6 (unten) mit beispielhaften Maßangaben;

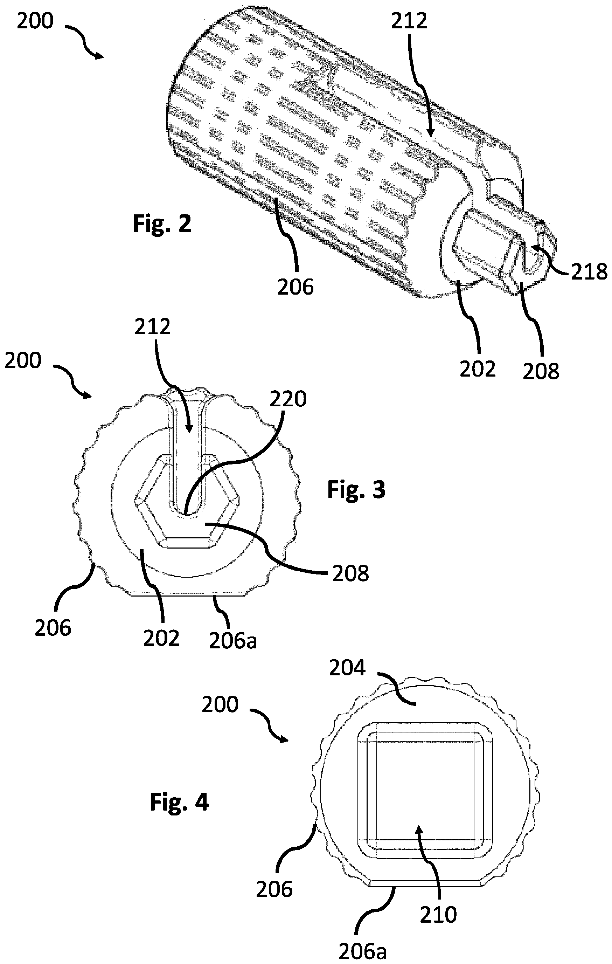

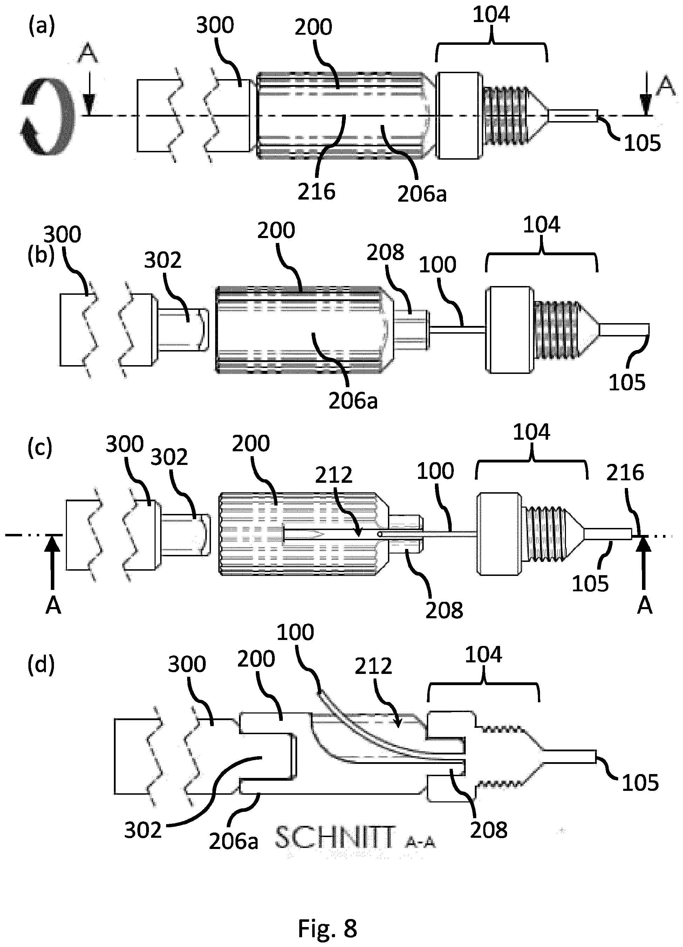

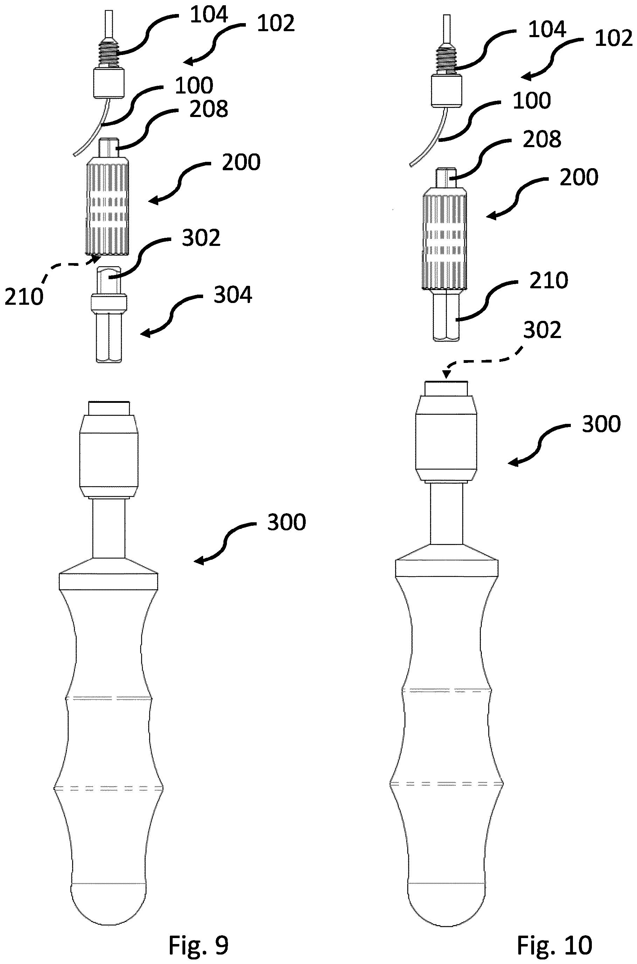

- Fig. 8: zeigt Ansichten einer Verwendung des Aufsatzes aus den Fig. 3-6 mit einem konventionellen Drehmomentschraubendreher (nur das wechselwirkende Eingriffselement des Drehmomentschraubendrehers ist gezeigt; vgl. Figuren 9 und 10 für eine beispielhafte Gesamtansicht) zum Anziehen einer HPLC-Kapillare mittels eines HPLC-Kapillarenschraubkopfes an einem kompatiblen Gegenstück; (a) laterale Ansicht; (b) Explosionsansicht in der gleichen Blickrichtung wie (a); (c) laterale Explosionsansicht mit entgegengesetzter Blickrichtung zu (a); (d) Schnitt A-A, wie in (a) und (c)eingezeichnet, d.h. entlang der Längsachse;
- Fig. 9: zeigt eine Ansicht einer Verwendung einer Ausführungsform des erfindungsgemäßen Aufsatzes mit einem Drehmomentschlüssel mit Drehmomentwerkzeugstandardadapter;
- Fig. 10: zeigt eine Ansicht einer Verwendung einer Ausführungsform des erfindungsgemäßen Aufsatzes mit einem Drehmomentschlüssel ohne Drehmomentwerkzeugstandardadapter (bspw. mit Bit-Aufnahme, bspw. ¼ Zoll Sechskant);
- Fig. 11: zeigt Ansichten einer Ausführungsform des erfindungsgemäßen Aufsatzes, (a) seitliche Ansicht mit Blick in Tiefenrichtung der Durchgangsöffnung, (b) Schnitt A-A aus Fig. 11a, d.h. entlang der Längsachse, (c) Ansicht auf die proximale Seite, (d) Ansicht auf die distale Seite.

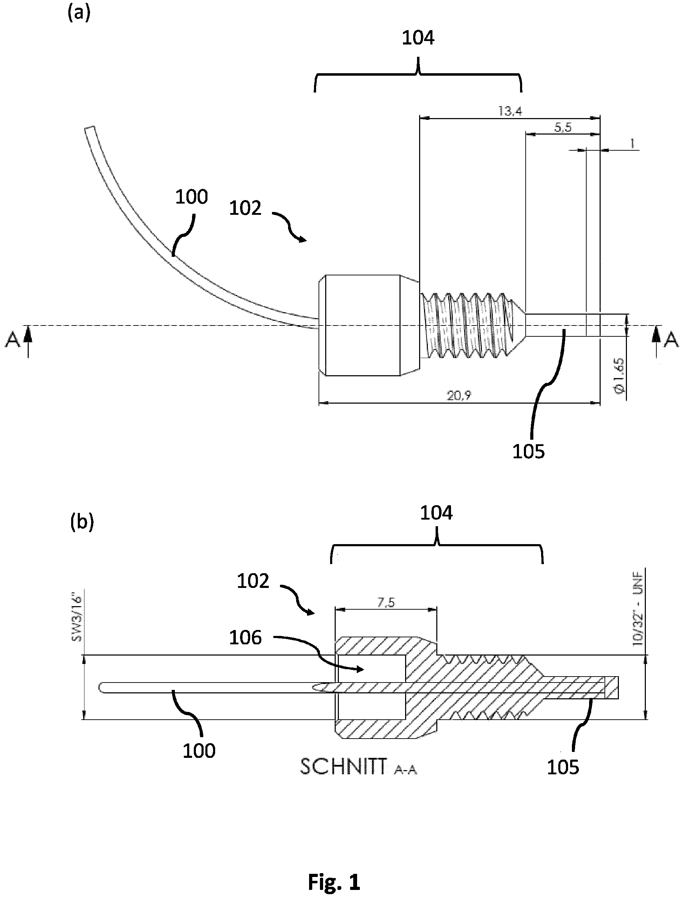

Ein typisches Beispiel für eine HPLC-Kapillare 100 (links in der Figur abgeschnitten) mit einem Fitting 102 mit HPLC-Kapillarenschraubkopf 104 und Stempel (Ferrule) 105 ist in den Ansichten in Fig. 1 gezeigt.

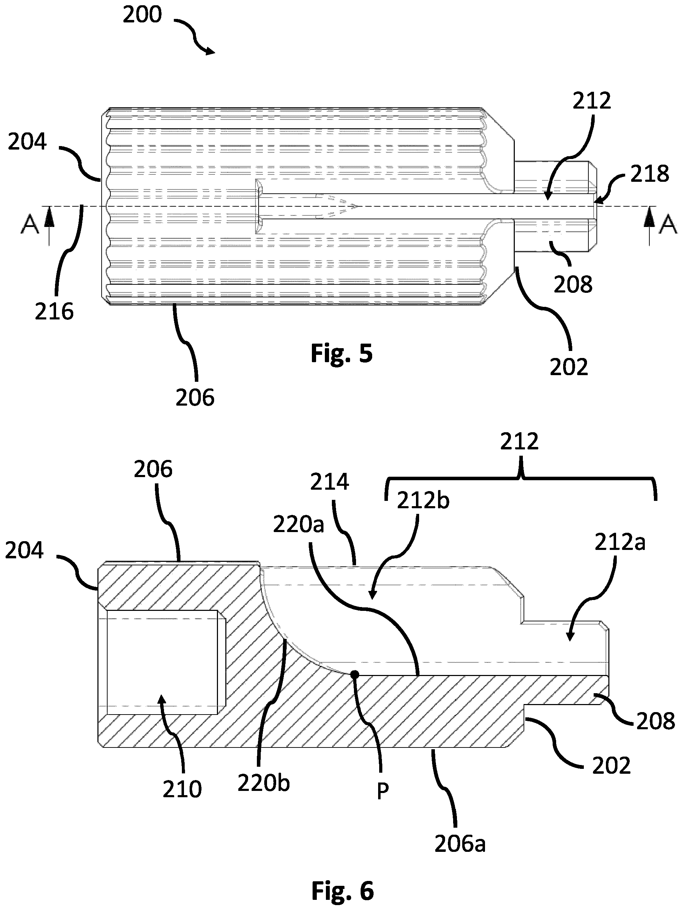

Figur 2 zeigt einen Aufsatz 200 gemäß der vorliegenden Erfindung in einer dreidimensionalen (d.h. 3D) Ansicht. Der Aufsatz 200 kann, wie gezeigt, eine im Wesentlichen zylindrische Grundform haben, mit einer distalen Seite 202, einer proximalen Seite 204 (siehe Fig. 4, ist in Fig. 2 verdeckt) und einem sich von der proximalen Seite 204 zur distalen Seite 202 erstreckenden Mantel 206. Der Mantel kann strukturiert sein, bspw. (wie gezeigt) geriffelt, um bspw. eine verbesserte Griffigkeit bereitzustellen. Figur 3 zeigt eine Ansicht auf die distale Seite 202. Figur 5 zeigt eine laterale Ansicht in eine Tiefenrichtung einer Durchgangsöffnung 212, die weiter unten ausführlich beschrieben wird. Figur 6 zeigt den Schnitt A-A wie in Fig. 5 angegeben, d.h. entlang einer Längsachse 216 des Aufsatzes 200.

Der Aufsatz 200 kann ein erstes Eingriffselement 208 aufweisen, das sich auf der distalen Seite 202 befinden und/oder sich von dieser erstrecken kann. Das erste Eingriffselement 208 kann bspw. dafür konfiguriert sein, auf einen Kapillarenschraubkopf 104 aufgesetzt, bspw. mit dem Kapillarenschraubkopf 104 in Eingriff gebracht zu werden, sodass die Übertragung eines Drehmoments von dem Aufsatz 200 auf den Kapillarenschraubkopf 104 möglich ist. Bspw. kann das erste Eingriffselement 208 dafür konfiguriert sein, mit einem kompatiblen zweiten Eingriffselement 106 des Kapillarenschraubkopfes 104 in Eingriff gebracht zu werden. Zum Beispiel kann das erste Eingriffselement 208 ein männliches Eingriffselement sein, das sich von einer Basis an der distalen Seite 202 von der distalen Seite 202 weg erstreckt. Das zweite Eingriffselement 106 kann ein weibliches Eingriffselement sein, das als Vertiefung in dem Kapillarenschraubkopf 104 ausgebildet ist (vgl. Fig. 1). Die Kanten des ersten Eingriffselements 208 können gefast sein. Das erste Eingriffselement 208 kann in jeder geeigneten Form, bspw. (wie gezeigt) als hexagonales Eingriffselement, und bspw.. als männliches (wie gezeigt) oder weibliches Eingriffselement ausgestaltet sein. Andere Formen sind möglich, bspw. jedes gängige Maß und Form von Schraubwerkzeugen, wie bereits beschrieben, solange ein drehfester Eingriff mit dem Kapillarenschraubkopf 104 hergestellt werden kann und/oder der Durchmesser des ersten Eingriffselements 208 in den Kapillarenschraubkopf 104 passt.

Der Aufsatz 200 kann ein drittes Eingriffselement 210 aufweisen, vgl. Fig. 4. Das dritte Eingriffselement 210 kann dafür konfiguriert sein, mit einem handelsüblichen Drehmomentwerkzeug 300 (vgl. Fig. 8) in Eingriff zu treten, sodass die Übertragung eines Drehmoments von dem Drehmomentwerkzeug 300 auf den Aufsatz 200 möglich ist. Insbesondere kann das dritte Eingriffselement 210 dafür konfiguriert sein, mit einem kompatiblen vierten Eingriffselement 302 des Drehmomentwerkzeugs 300 in Eingriff zu treten. In Fig. 8(a) ist das Drehmomentwerkzeug 300 mit dem Aufsatz 200 in Eingriff gezeigt. Der Aufsatz 200 ist auch mit dem Kapillarenschraubkopf 104 in Eingriff. Wird nun das Drehmomentwerkzeug 300 gedreht (verdeutlicht durch breiten gefüllten Pfeil) wird ein Drehmoment über den Aufsatz 200 auf den Kapillarenschraubkopf 104 übertragen, sodass der Kapillarenschraubkopf sachgemäß an einem passenden Gegenstück angezogen werden kann. Insbesondere kann Mittels der Einstellung des Soll-Drehmoments im DrehmomentWerkzeug das korrekte Anzugsdrehmoment sichergestellt werden.

Figur 8(b) zeigt die Ansicht aus Fig. 8(a) nochmals als Explosionszeichnung (Explosion entlang der zentralen Längsachse 216).

Bevorzugt ist das dritte Eingriffselement 210 in Form und Größe gemäß einem üblichen Standard ausgebildet. Die Kanten des dritten Eingriffselements 210 können gefast sein. Der Aufsatz 200 kann eine (in Zusammenhang mit Fig. 5 bereits erwähnte) Durchgangsöffnung 212 aufweisen. Das erste Eingriffselement 208 kann einen Abschnitt 212a der Durchgangsöffnung 212 aufweisen, d.h. einen Abschnitt der Durchgangsöffnung 212 definieren. Die Durchgangsöffnung 212 kann einen vom Abschnitt 212a im ersten Eingriffselement 208 verschiedenen Abschnitt 212b aufweisen. Die Durchgangsöffnung 212 kann sich von dem ersten Eingriffselement 208, bspw. von einer Öffnung 218 an einem distalen Ende des ersten Eingriffselements 208, zu einer Öffnung 214 im Mantel 206 erstrecken. Beispielsweise kann die Durchgangsöffnung 212 als Schlitz durch eine Oberfläche des Aufsatzes 200 ausgebildet sein. Der Schlitz kann sich von der Oberfläche des Aufsatzes 200 in eine Tiefenrichtung erstrecken, bspw. zu einer Längsachse 216, bevorzugt einer zentralen Längsachse 216, des Aufsatzes 200 und optional darüber hinaus. Die Tiefenrichtung kann definiert sein als die Richtung zum nächstliegenden Punkt auf der Längsachse 216 des Aufsatzes 200. Figur 8(c) zeigt eine Explosionsansicht mit Blickrichtung entgegengesetzt zur Blickrichtung in Fig. 8(b). In Fig. 8(c) ist die Durchgangsöffnung 212 zu sehen und die Blickrichtung ist in Tiefenrichtung der Durchgangsöffnung 212. Die Kapillare 100 ist nur teilweise gezeigt. Figur 8(d) zeigt den Schnitt A-A wie in Fig. 8(a) eingezeichnet, d.h. entlang der zentralen Längsachse 216. Hier ist die Durchgangsöffnung 212 senkrecht zur Tiefenrichtung zu sehen.

Die Maße der Durchgangsöffnung 212 können an die Spezifikationen, insbesondere den Außendurchmesser und die Biegesteifigkeit, der Kapillare 100 angepasst sein. Die Durchgangsöffnung 212 kann eine Form und Größe aufweisen, die einen Kapillarenabschnitt von mindestens 10 mm Länge beherbergen kann. Die Durchgangsöffnung 212 kann eine Länge von mindestens 10 mm aufweisen, wobei die Länge gemessen wird als kürzeste Verbindung entlang einer Wand der Durchgangsöffnung 212 von der Öffnung 218 am distalen Ende des ersten Eingriffselements 208 zur Öffnung 214 im Mantel 206. Die Durchgangsöffnung 212 kann eine Breite von mindestens 350 µm haben, wobei die Breite senkrecht zur (bevorzugt zentralen) Längsachse 216 und senkrecht zur Tiefenrichtung gemessen wird.

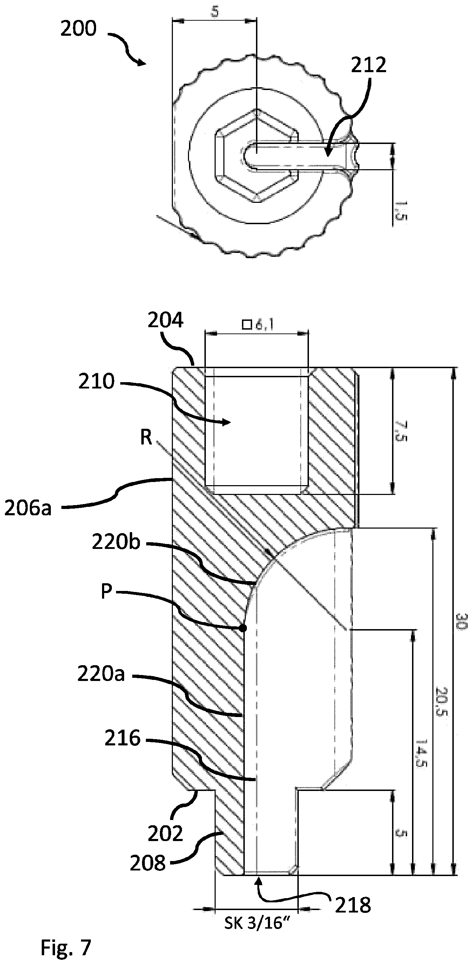

Bei Betrachtung der Durchgangsöffnung 212 in einer Schnittebene, bspw. in der in Fig. 7 gezeigten Schnittebene A (d.h. einer Schnittebene entlang der zentralen Längsachse 216 und entlang der Tiefenrichtung der Durchgangsöffnung 212), kann die Durchgangsöffnung folgende Spezifikationen und/oder Maße haben:
- Die die Durchgangsöffnung 212 begrenzende Wand 220 des Aufsatzes 200 erstreckt sich in einem distalen Abschnitt 220a von der Öffnung 218 am distalen Ende des ersten Eingriffselements 208 in Richtung proximale Seite 204, vorzugsweise parallel zur Längsachse 216 des Aufsatzes 200 und/oder vorzugsweise über eine Länge von mindestens 2 mm, oder mindestens 3 mm, oder mind. 4 mm, bevorzugt mind. 5 mm, besonders bevorzugt mindestens 10 mm, weiter bevorzugt zwischen 14 und 15 mm, bis zu einem Punkt P.
- Die die Durchgangsöffnung 212 begrenzende Wand 220 des Aufsatzes 200 erstreckt sich in einem proximalen Abschnitt 220b vom Punkt P entlang einer gekrümmten Bahn, bspw. einer Kreisbahn, zur Öffnung 214 im Mantel 206 des Aufsatzes 200, vorzugsweise über eine Länge von 9,4 mm. Die Kreisbahn kann einen Radius R von vorzugsweise 6 mm haben. Der Mittelpunkt der Kreisbahn kann sich auf dem Mantel 206 befinden.
- Der Abstand zwischen der Wand 220 und der (bevorzugt zentralen) Längsachse 216 kann im distalen Abschnitt 220a den halben Kapillarendurchmesser, jedoch mindestens 175 µm betragen, bevorzugt 250 µm, weiter bevorzug 500 µm, ganz bevorzugt 750 µm, wobei sich die Längsachse 216 zwischen der Wand 220 und der Öffnung 214 im Mantel 206 befinden kann. Der proximale Abschnitt 220b der Wand 220 kann ein Drittel, ein Viertel, ein Sechstel oder ein Achtel eines Kreises aufweisen.
- Die Länge des Aufsatzes, gemessen von einem proximalsten zu einem distalsten Ende kann 17 mm - 1000 mm, bspw. bevorzugt 30 mm betragen

Bei Betrachtung der Durchgangsöffnung 212 in einer Schnittebene, bspw. in einer Schnittebene senkrecht zur (bevorzugt zentralen) Längsachse 216 und im Abschnitt 212a der Durchgangsöffnung 212, der sich im ersten Eingriffselement befindet, kann die Durchgangsöffnung 212, also der Querschnitt der Durchgangsöffnung 212, folgende Spezifikationen und/oder Maße haben:
- Die Durchgangsöffnung kann im Wesentlichen die Form eines Reagenzglases haben, bzw. die die Durchgangsöffnung begrenzende Wand 220 kann im Wesentlichen eine U-Form aufweisen.
- Der Abstand zwischen den Schenkeln der U-Form kann mindesten 350 µm betragen, bspw. bevorzugt 1,5 mm.
- Die Tiefe der U-Form kann den halben Durchmesser des Aufsatzes plus den halben Durchmesser der Kapillare, bspw. bevorzugt 2,675 mm, betragen. Im Falle eines geraden, runden Zylinders als Mantel 206 des Aufsatzes wird als Durchmesser der Durchmesser des Zylinders verwendet, auch wenn es eine Abflachung 206a (siehe unten) geben sollte, d.h. ohne die Berücksichtigung der Reduktion des Durchmessers durch die Abflachung.

Bei Betrachtung der Durchgangsöffnung 212 in einer Schnittebene, bspw. in einer Schnittebene senkrecht zur (bevorzugt zentralen) Längsachse 216 und im Abschnitt 212b der Durchgangsöffnung 212, der sich außerhalb des ersten Eingriffselements befindet und durch den distalen Abschnitt 220b der Wand 220 geht, kann die Durchgangsöffnung 212, also der Querschnitt der Durchgangsöffnung 212, folgende Spezifikationen und/oder Maße haben:
- Die Durchgangsöffnung kann im Wesentlichen die Form eines Reagenzglases haben, bzw. die die Durchgangsöffnung begrenzende Wand 220 kann im Wesentlichen eine U-Form aufweisen.
- Der Abstand zwischen den Schenkeln der U-Form kann mindestens 350 µm betragen, bspw. bevorzugt 1,5 mm.
- Die Tiefe der U-Form kann den halben Durchmesser des Aufsatzes plus den halben Durchmesser der Kapillare, bspw. mindestens 3,675 mm und maximal 10,65 mm, bspw. bevorzugt 6,175 mm betragen. Im Falle eines geraden, runden Zylinders als Mantel 206 des Aufsatzes wird als Durchmesser der Durchmesser des Zylinders verwendet, auch wenn es eine Abflachung 206a (siehe unten) geben sollte, d.h. ohne die Berücksichtigung der Reduktion des Durchmessers durch die Abflachung.

Bei Betrachtung der Durchgangsöffnung 212 in einer Schnittebene, bspw. in einer Schnittebene senkrecht zur (bevorzugt zentralen) Längsachse 216 und im Abschnitt 212b der Durchgangsöffnung 212, der sich außerhalb des ersten Eingriffselements befindet und durch den proximalen Abschnitt 220b der Wand 220 geht, kann die Durchgangsöffnung 212, also der Querschnitt der Durchgangsöffnung 212, folgende Spezifikationen und/oder Maße haben:
- Die Durchgangsöffnung kann im Wesentlichen die Form eines Reagenzglases haben, bzw. die die Durchgangsöffnung begrenzende Wand 220 kann im Wesentlichen eine U-Form aufweisen.
- Der Abstand zwischen den Schenkeln der U-Form kann mindestens 350 µm betragen, bspw. bevorzugt 1,5 mm.
- Die Tiefe der U-Form kann zwischen den halben Durchmesser des Aufsatzes plus den halben Durchmesser der Kapillare, bspw. mindestens 3,675 mm und maximal 10,65 mm, bspw. bevorzugt 6,175 mm, am Punkt P und 0 am proximalen Ende der Durchgangsöffnung betragen.

Der Aufsatz kann die Form und die Maße haben, wie in Fig. 7 gezeigt.

Der Aufsatz 200 kann aus Vollmaterial hergestellt sein. Der Aufsatz 200 kann, abgesehen von der Durchgangsöffnung 212 und ggf. dem ersten und/oder dritten Eingriffselement 208, 210 frei von Hohlräumen sein.

Der Aufsatz 200 kann ein schwammartiges und/oder poröses aber formstabiles Material aufweisen oder daraus bestehen.

Der Aufsatz 200 kann eines oder eine Kombination der folgenden Materialien aufweisen: Metall, Polymer, Glas, Holz, Verbundstoffe.

Das dritte Eingriffselement 210 ist vorzugsweise frei von einem Abschnitt der Durchgangsöffnung 212.

Der Mantel 206 kann optional eine Abflachung 206a aufweisen. Ein Vorteil des Vorhandenseins der Abflachung 206a ist, dass ein Wegrollen des Aufsatzes 200 verhindert wird, wenn der Aufsatz 200 abgelegt wird. Ein Abstand der (bevorzugt zentralen) Längsachse 216 zum nächstliegenden Punkt der Abflachung 206 kann mindestens 1,5 mm, bspw. bevorzugt 5 mm, betragen. Die Abflachung 206a kann sich beispielsweise auf einer der Durchgangsöffnung 212 gegenüberliegenden Seite des Mantels 206 befinden. Die Abflachung kann von der Durchgangsöffnung 212 nicht durchbrochen sein und/oder die Durchgangsöffnung nicht berühren. Alternativ oder zusätzlich kann sich die Abflachung 206a auf einer beliebigen Seite des Mantels 206 erstrecken, z.B. derart, dass die Abflachung 206a von der Durchgangsöffnung 212 durchbrochen und/oder berührt wird.

Figur 9 zeigt eine Ausführungsform des Aufsatzes 200 in Verwendung mit einem Drehmomentwerkzeug 300, das mit einem Drehmomentwerkzeugstandardadapter 304 versehen ist. Der Drehmomentwerkzeugstandardadapter 304 ist auswechselbar und standardisiert, sodass das Drehmomentwerkzeug mittels verschiedener Drehmomentstandradadapter 304 an unterschiedliche weitere Standard-Werkzeuge und/oder Standard-Zubehör (z.B. Schraubentypen) angepasst werden kann. Das vierte Eingriffselement 302 sitzt hier auf dem Drehmomentwerkzeugstandardadapter 304, bevorzugt an dessen distalem Ende. Der Drehmomentwerkzeugstandardadapter 304 wird hier dem Drehmomentwerkzeug 300 zugerechnet.

In Figur 10 ist eine Ausführungsform eines Aufsatzes 200 in Verwendung mit einem Drehmomentwerkzeug 300 gezeigt, das nicht mit einem Drehmomentwerkzeugstandardadapter versehen ist. Das vierte Eingriffselement 302 sitzt hier auf dem Drehmomentwerkzeug 300 und ist, anders als der Drehmomentwerkzeugstandardadapter 304, nicht dafür ausgelegt, vom Benutzer gewechselt zu werden.

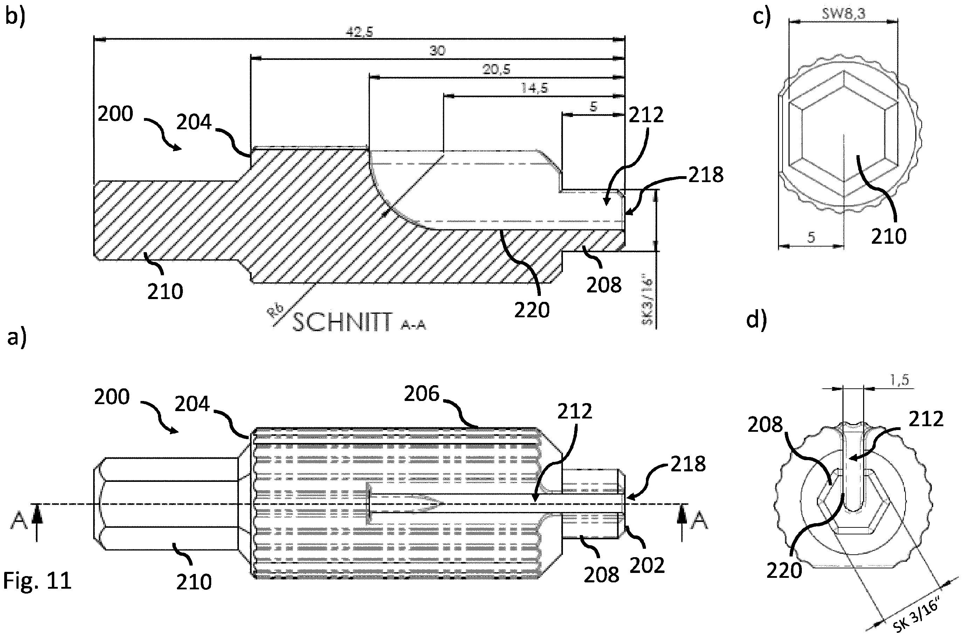

Figur 11 zeigt vier Ansichten des Aufsatzes 200 aus Fig. 10. Der Aufsatz 200 kann wie gezeigt mit einem weiblichen ersten Eingriffselement auf der distalen Seite 202 des Aufsatzes 200 und mit einem weiblichen zweiten Eingriffselement 210 auf der proximalen Seite 204 des Aufsatzes 200 versehen sein.

Gemäß einem weiteren Aspekt bezieht sich die vorliegende Erfindung auf ein Set, das einen Aufsatz 200 und ein Drehmomentwerkzeug, bevorzugt einen Drehmomentschraubendreher 300 aufweist.

Gemäß einem erfindungsgemäßen Verfahren werden folgende Schritte ausgeführt, um eine HPLC-Kapillare 100, auf der ein HPLC-Kapillarenschraubkopf sitzt, mittels des hierin beschriebenen Aufsatzes 200 an einem mit dem HPLC-Kapillarenschraubkopf kompatiblen Port zu montieren:
- Aufsetzen des Aufsatzes 200 auf den HPLC-Kapillarenschraubkopf 104;
- Aufsetzen eines Drehmomentwerkzeugs, bspw. eines Drehmomentschraubendrehers 300, auf den Aufsatz 200;
- optional Ansetzen des HPLC-Kapillarenschraubkopfs 104 an den kompatiblen Port;
- Anziehen des HPLC-Kapillarenschraubkopfes 104, wobei während des Anziehens ein vorgesehenes Anzugsmoment im Drehmomentwerkzeug eingestellt ist.

Das Anziehen des HPLC-Kapillarenschraubkopfes 104 kann dadurch erfolgen, dass der Anwender mit der Hand ein Drehmoment auf das Drehmomentwerkzeug ausübt, welches das Drehmoment über den Aufsatz an den HPLC-Kapillarenschraubkopfe 104 überträgt.

Das Verfahren kann den Schritt aufweisen:
- Einstellen eines Soll-Drehmoments im Drehmomentwerkzeug.

Falls es sich um ein auslösendes Drehmomentwerkzeug handelt, stellt das Drehmomentwerkzeug automatisch sicher, dass das eingestellte Soll-Drehmoment nicht überschritten wird, indem es bei Überschreiten des eingestellten Soll-Drehmoments durchdreht.

Falls es sich um ein anzeigendes Drehmomentwerkzeug handelt, kann das Verfahren den zusätzlichen Schritt aufweisen:
- Beenden des Schrittes des Anziehens, wenn das Drehmomentwerkzeug ein Erreichen und/oder Überschreiten des eingestellten Soll-Drehmoments anzeigt.

Gemäß einem weiteren Aspekt bezieht sich die vorliegende Erfindung auf einen Aufsatz 200 mit integrierter Drehmomentfuktion.

Gemäß einem erfindungsgemäßen Verfahren werden folgende Schritte ausgeführt, um eine HPLC-Kapillare 100, auf der ein HPLC-Kapillarenschraubkopf sitzt, mittels des hierin beschriebenen Aufsatzes 200 mit integrierter Drehmomentfunktion an einem mit dem HPLC-Kapillarenschraubkopf 104 kompatiblen Port zu montieren:
- Aufsetzen des Aufsatzes 200 mit integrierter Drehmomentfunktion auf den HPLC-Kapillarenschraubkopf 104;
- optional Aufsetzen eines Drehwerkzeugs, bspw. eines Schraubendrehers, auf den Aufsatz 200 mit integrierter Drehmomentfunktion;
- optional Ansetzen des HPLC-Kapillarenschraubkopfs 104 an den kompatiblen Port;
- Anziehen des HPLC-Kapillarenschraubkopfes 104, wobei während des Anziehens ein vorgesehenes Anzugsmoment im Aufsatz 200 mit integrierter Drehmomentfunktion eingestellt ist.

Das Verfahren kann den Schritt aufweisen:
- Einstellen eines Soll-Drehmoments im Aufsatz 200 mit integrierter Drehmomentfunktion.

Falls es sich um eine auslösende Drehmomentfunktion handelt, stellt diese automatisch sicher, dass das eingestellte Soll-Drehmoment nicht überschritten wird, indem der Aufsatz 200 bei Überschreiten des eingestellten Soll-Drehmoments durchdreht.

Falls es sich um eine anzeigende Drehmomentfunktion handelt, kann das Verfahren den zusätzlichen Schritt aufweisen:
- Beenden des Schrittes des Anziehens, wenn der Aufsatz 200 mit integrierter Drehmomentfunktion ein Erreichen und/oder Überschreiten des eingestellten Soll-Drehmoments anzeigt.

Analog dazu kann das Verfahren für den Fall eines Drehmomentwerkzeuges mit integriertem Aufsatz 200 folgende Schritte aufweisen um eine HPLC-Kapillare 100, auf der ein HPLC-Kapillarenschraubkopf 104 sitzt, mittels eines Drehmomentwerkzeugs mit integriertem Aufsatz 200 an einem mit dem HPLC-Kapillarenschraubkopf 104 kompatiblen Port zu montieren:
- Aufsetzen des in das Drehmomentwerkzeug integrierten Aufsatzes 200 auf den HPLC-Kapillarenschraubkopf 104;
- optional Ansetzen des HPLC-Kapillarenschraubkopfs 104 an den kompatiblen Port;
- Anziehen des HPLC-Kapillarenschraubkopfes 104, wobei während des Anziehens ein vorgesehenes Anzugsmoment im Drehmomentwerkzeug mit integriertem Aufsatz 200 eingestellt ist.

Das Verfahren kann den Schritt aufweisen:
- Einstellen eines Soll-Drehmoments im Drehmomentwerkzeug mit integriertem Aufsatz 200.

Falls es sich um eine auslösende Drehmomentfunktion in dem Drehmomentwerkzeug handelt, stellt diese automatisch sicher, dass das eingestellte Soll-Drehmoment nicht überschritten wird, indem der Aufsatz 200 bei Überschreiten des eingestellten Soll-Drehmoments durchdreht.

Falls es sich um eine anzeigende Drehmomentfunktion handelt, kann das Verfahren den zusätzlichen Schritt aufweisen:
- Beenden des Schrittes des Anziehens, wenn das Drehmomentwerkzeug mit integriertem Aufsatz 200 ein Erreichen und/oder Überschreiten des eingestellten Soll-Drehmoments anzeigt.

Nachfolgend eine Liste mit bevorzugten Ausführungsformen der Erfindung:
1. Aufsatz für einen HPLC-Kapillarenschraubkopf, wobei der Aufsatz dafür konfiguriert ist, ein Drehmoment von einem Drehmomentwerkzeug auf den HPLC-Kapillarenschraubkopf zu übertragen, wobei der HPLC-Kapillarenschraubkopf auf einer HPLC-Kapillare sitzt.
2. Aufsatz nach Aspekt 1, wobei der Aufsatz ein erstes Eingriffselement aufweist, das dafür konfiguriert ist, mit einem kompatiblen zweiten Eingriffselement des HPLC-Kapillarenschraubkopfs in Eingriff zu treten und, in Eingriff stehend, das Drehmoment zu übertragen.
3. Aufsatz nach einem der vorhergehenden Aspekte, wobei der Aufsatz ein drittes Eingriffselement aufweist, das dafür konfiguriert ist, mit einem kompatiblen vierten Eingriffselement des Drehmomentwerkzeugs in Eingriff zu treten und, in Eingriff stehend, das Drehmoment zu übertragen.
4. Aufsatz nach einem der Aspekte 2 oder 3, wobei der Aufsatz dafür konfiguriert ist, die HPLC-Kapillare so zu leiten, dass der Eingriff zwischen dem dritten und dem vierten Eingriffselement möglich ist und/oder der Eingriff zwischen dem ersten und dem zweiten Eingriffselement möglich ist.
5. Aufsatz nach dem vorhergehenden Aspekt, wobei der Aufsatz eine Durchführungsöffnung, bspw. eine seitliche Öffnung, aufweist, die dafür konfiguriert ist, die HPLC-Kapillare so zu leiten, dass der Eingriff zwischen dem dritten und dem vierten Eingriffselement möglich ist und/oder der Eingriff zwischen dem ersten und dem zweiten Eingriffselement möglich ist.
6. Aufsatz nach Aspekt 5, wobei das erste Eingriffselement einen Abschnitt der Durchführungsöffnung aufweist.
7. Aufsatz nach einem der Aspekte 2-6, wobei das erste Eingriffselement ein männliches Eingriffselement ist.
8. Aufsatz nach einem der Aspekte 6-7, wobei das erste Eingriffselement mehrere Eingriffselementabschnitte aufweist, wobei die Eingriffselementabschnitte um den Abschnitt der Durchgangsöffnung angeordnet sind.
9. Aufsatz nach einem der Aspekte 2-8, wobei das zweite Eingriffselement von einem Außenumfang des HPLC-Kapillarenschraubkopfes beabstandet ist und/oder ein weibliches Eingriffselement ist.
10. Aufsatz nach einem der Aspekte 2-9, wobei sich der Aufsatz von einer proximalen Seite, die das dritte Eingriffselement aufweist, zu einer distalen Seite, die das erste Eingriffselement aufweist, erstreckt, und wobei vorzugsweise das erste Eingriffselement von einem Außenumfang der distalen Seite beabstandet ist.
11. Aufsatz nach Aspekt 10 in Abhängigkeit von Aspekt 5, wobei der Aufsatz eine im Wesentlichen zylindrische Grundform mit einer Grundfläche, einer Deckfläche und einem Mantel, der sich von der Grundfläche zur Deckfläche erstreckt, hat, wobei die Grundfläche der proximalen Seite entspricht und die Deckfläche der distalen Seite entspricht, und wobei sich die Durchführungsöffnung von einer mittigen Position auf der distalen Seite durch den Mantel erstreckt.
12. Aufsatz nach einem der Aspekte 5-10, wobei die Durchführungsöffnung eine Länge von mindestens 5 mm, bevorzugt mindestens 10 mm hat.
13. Aufsatz nach einem der Aspekte 5-11, wobei die Durchführungsöffnung eine Biegung aufweist, wobei die Biegung vorzugsweise einen Radius von 6 mm hat.
14. Aufsatz nach einem der Aspekte 5-12, wobei die Durchführungsöffnung eine Breite von mindestens 350 µm hat.
15. Aufsatz nach einem der Aspekte 5-14, wobei die Durchführungsöffnung eine Tiefe von mindestens dem halben Durchmesser des Aufsatzes, bevorzugt mindestens dem halben Durchmesser des Aufsatzes plus dem halben Durchmesser der Kapillare, hat.
16. Aufsatz nach einem der Aspekte 6-15, wobei das erste Eingriffselement ein männliches Sechskant-Eingriffselement ist.
17. Aufsatz nach einem der Aspekte 6-16, wobei der Abschnitt der Durchführungsöffnung, den das erste Eingriffselement aufweist, als Schlitz ausgebildet ist, der sich von einer lateralen Oberfläche des ersten Eingriffselements in Richtung zur Mittelachse des ersten Eingriffselements und optional bis zur Mittelachse des ersten Eingriffselements und/oder darüber hinaus erstreckt.
18. Aufsatz nach Aspekt 17 in Kombination mit Anspruch 16, wobei der Abschnitt der Durchführungsöffnung, den das erste Eingriffselement aufweist, als Schlitz ausgebildet ist, der sich von einer lateralen Oberfläche des Sechskant-Eingriffselements zur Mittelachse des Sechskant-Eingriffselements und darüber hinaus erstreckt.
19. Aufsatz nach einem der Aspekte 5-18, wobei die Durchführungsöffnung einen Abschnitt aufweist, der sich durch einen vom ersten Eingriffselement verschiedenen Abschnitt des Aufsatzes erstreckt.
20. Aufsatz nach einem der Aspekte 3-19, wobei das dritte Eingriffselement ein weibliches Eingriffselement ist oder das vierte Eingriffselement ein männliches Eingriffselement ist.
21. Aufsatz nach einem der Aspekte 3-19, wobei das dritte Eingriffselement ein standardisiertes Eingriffselement ist und/oder dafür konfiguriert ist, mit einem der folgenden vierten Eingriffselemente in eingriff zu treten:
   - ein 1/4 Zoll Innen-Vierkant
   - ein 1/4 Zoll Außen-Vierkant
   - ein 1/2 Zoll Innen-Vierkant
   - ein 1/2 Zoll Außen-Vierkant
   - ein 3/8 Zoll Innen-Vierkant
   - ein 3/8 Zoll Außen-Vierkant
   - ein 5/16 Zoll Innen-Vierkant
   - ein 5/16 Zoll Außen-Vierkant
   - ein 4-14 mm Innen-Sechskant
   - ein 4-14 mm Außen-Sechskant
   - ein 4-14 mm Innen-Achtkant
   - ein 4-14 mm Außen-Achtkant
   - ein 4-14 mm Innen-Zehnkant
   - ein 4-14 mm Außen-Zehnkant
   - ein 4-14 mm Innen-Zwölfkant
   - ein 4-14 mm Außen-Zwölfkant
   - Außen-Torx (E-Nuss)
   - Innen-Torx (E-Nuss)
   - ein Gewinde;
   - das vierte Eingriffselement ist Teil einer Klinge eines Drehmomentschraubendrehers;
      das vierte Eingriffselement ist Teil eines Drehmomentschraubendrehers ohne eine Klinge, d.h. Teil eines Drehmomentschraubendrehergriffs mit Drehmomentfunktion.
22. Aufsatz nach einem der Aspekte 3-19, wobei das dritte Eingriffselement ein standardisiertes Eingriffselement ist, bspw. eines der folgenden Eingriffselemente:
   - ein 1/4 Zoll Innen-Vierkant
   - ein 1/4 Zoll Außen-Vierkant
   - ein 1/2 Zoll Innen-Vierkant
   - ein 1/2 Zoll Außen-Vierkant
   - ein 3/8 Zoll Innen-Vierkant
   - ein 3/8 Zoll Außen-Vierkant
   - ein 5/16 Zoll Innen-Vierkant
   - ein 5/16 Zoll Außen-Vierkant
   - ein 4-14 mm Innen-Sechskant
   - ein 4-14 mm Außen-Sechskant
   - ein 4-14 mm Innen-Achtkant
   - ein 4-14 mm Außen-Achtkant
   - ein 4-14 mm Innen-Zehnkant
   - ein 4-14 mm Außen-Zehnkant
   - ein 4-14 mm Innen-Zwölfkant
   - ein 4-14 mm Außen-Zwölfkant
   - Außen-Torx (E-Nuss)
   - Innen-Torx (E-Nuss)
   - ein Gewinde, bevorzugt mit einer Windung in gleicher Richtung zum Gewinde des HPLC-Kapillarenschraubkopfes;
   - das dritte Eingriffselement ist Teil einer Klinge, die für den Eingriff mit einem Drehmomentschraubendrehergriff mit Drehmomentfunktion konfiguriert ist.
23. Aufsatz nach einem der vorhergehenden Aspekte, wobei der Aufsatz folgende Abmessungen aufweist:
   - als Zylinder mit kreisförmiger Grundfläche und Deckfläche: einen Radius von mindestens 4 mm und/oder von maximal 10 mm; eine Höhe des Zylinders von 12 mm bis 995 mm;
   - als Quader (d.h. gerader Zylinder mit rechteckiger oder quadratischer Grundfläche und Deckfläche): eine Seitenlänge der Grundfläche und/oder der Deckfläche von mindestens 7 mm und/oder von maximal 20 mm; eine Höhe des Zylinders von mindestens 12 mm;
   - als gerader Zylinder mit sechseckiger Grundfläche und Deckfläche: eine Seitenlänge der Grundfläche und/oder der Deckfläche von mindestens 3,5 mm und/oder maximal 10 mm; ein Durchmesser der Grundfläche und/oder der Deckfläche von 7 bis 20 mm; eine Höhe des Sechskant-Zylinders von 12 mm bis 995 mm;
   - als gerader Zylinder mit achteckiger Grundfläche und Deckfläche: eine Seitenlänge der Grundfläche und/oder der Deckfläche von mindestens 2,9 mm und/oder maximal 8,5 mm; ein Durchmesser der Grundfläche und/oder der Deckfläche von 7 bis 20 mm; eine Höhe des Achtkant-Zylinders von 12 mm bis 995 mm.
24. Aufsatz nach einem der vorhergehenden Aspekte, wobei der Aufsatz eine Länge über den gesamten Körper von
   - mindestens 17 mm aufweisen; und/oder
   - maximal 1000 mm, maximal 500mm, maximal 300 mm, maximal 200 mm, oder maximal 100 mm, oder jeden Wert in 1 mm Schritten zwischen 1000 mm und 17 mm aufweisen.
25. Aufsatz nach einem der vorhergehenden Aspekte mit integrierter Drehmomentfunktion.
26. Set, das aufweist:
   - einen Aufsatz nach einem der vorhergehenden Aspekte; und
   - ein kompatibles Drehmomentwerkzeug.
27. Drehmomentwerkzeug mit integriertem Aufsatz nach einem der vorhergehenden Aspekte ohne Aspekt 13.
28. Verfahren zum Montieren einer HPLC-Kapillare mit einem HPLC-Kapillarenschraubkopf mittels eines kompatiblen Aufsatzes nach einem der vorhergehenden Aspekte an einem zum HPLC-Kapillarenschraubkopf kompatiblen Gegenstück, das folgende Schritte aufweist:
   - Aufsetzen des Aufsatzes auf den HPLC-Kapillarenschraubkopf;
   - Aufsetzen eines Drehmomentwerkzeugs auf den Aufsatz;
   - Anziehen des HPLC-Kapillarenschraubkopfes, wobei während des Anziehens ein vorgesehenes Anzugsmoment im Drehmomentwerkzeug eingestellt ist.

### Bezugszeichenliste:

- 100: HPLC-Kapillare (kurz Kapillare)
- 102: HPLC-Fitting
- 104: HPLC-Kapillarenschraubkopf (kurz Kapillarenschraubkopf, oder Schraubkopf)
- 105: Stempel
- 106: zweites Eingriffselement
- 200: Aufsatz
- 202: distale Seite des Aufsatzes
- 204: proximale Seite des Aufsatzes
- 206: Mantel des Aufsatzes
- 208: erstes Eingriffselement
- 210: drittes Eingriffselement
- 212: Durchgangsöffnung
- 212a: Abschnitt der Durchgangsöffnung im ersten Eingriffselement
- 212b: Abschnitt der Durchgangsöffnung der vom Abschnitt 212a verschieden ist
- 214: Öffnung im Mantel
- 216: (bevorzugt zentrale) Längsachse des Aufsatzes
- 218: Öffnung am distalen Ende des ersten Eingriffselements
- 220: die Durchgangsöffnung begrenzende Wand
- 220a: distaler Abschnitt der die Durchgangsöffnung begrenzenden Wand
- 220b: proximaler Abschnitt der die Durchgangsöffnung begrenzenden Wand
- 300: Drehmomentwerkzeug
- 302: viertes Eingriffselement
- 304: Standardadapter für Drehmomentwerkzeug

## Patentansprüche

1. Aufsatz für einen HPLC-Kapillarenschraubkopf, wobei der Aufsatz dafür konfiguriert ist, ein Drehmoment von einem Drehmomentwerkzeug auf den HPLC-Kapillarenschraubkopf zu übertragen, wobei der HPLC-Kapillarenschraubkopf auf einer HPLC-Kapillare sitzt.

2. Aufsatz nach Anspruch 1, wobei der Aufsatz ein erstes Eingriffselement aufweist, das dafür konfiguriert ist, mit einem kompatiblen zweiten Eingriffselement des HPLC-Kapillarenschraubkopfs in Eingriff zu treten und, in Eingriff stehend, das Drehmoment zu übertragen; und/oder
wobei der Aufsatz ein drittes Eingriffselement aufweist, das dafür konfiguriert ist, mit einem kompatiblen vierten Eingriffselement des Drehmomentwerkzeugs in Eingriff zu treten und, in Eingriff stehend, das Drehmoment zu übertragen.

3. Aufsatz nach Anspruch 2, wobei der Aufsatz dafür konfiguriert ist, die HPLC-Kapillare so zu leiten, dass der Eingriff zwischen dem dritten und dem vierten Eingriffselement möglich ist und/oder der Eingriff zwischen dem ersten und dem zweiten Eingriffselement möglich ist; wobei
der Aufsatz vorzugsweise eine Durchführungsöffnung, bspw. eine seitliche Öffnung, aufweist, die dafür konfiguriert ist, die HPLC-Kapillare so zu leiten, dass der Eingriff zwischen dem dritten und dem vierten Eingriffselement möglich ist und/oder der Eingriff zwischen dem ersten und dem zweiten Eingriffselement möglich ist.

4. Aufsatz nach Anspruch 3, wobei das erste Eingriffselement
- einen Abschnitt der Durchführungsöffnung aufweist;
- ein männliches Eingriffselement ist, bspw. ein männliches Sechskant-Eingriffselement; und/oder
- mehrere Eingriffselementabschnitte aufweist, wobei die Eingriffselementabschnitte um den Abschnitt der Durchgangsöffnung angeordnet sind.

5. Aufsatz nach einem der Ansprüche 2-4, wobei das zweite Eingriffselement von einem Außenumfang des HPLC-Kapillarenschraubkopfes beabstandet ist und/oder ein weibliches Eingriffselement ist.

6. Aufsatz nach einem der Ansprüche 2-5, wobei sich der Aufsatz von einer proximalen Seite, die das dritte Eingriffselement aufweist, zu einer distalen Seite, die das erste Eingriffselement aufweist, erstreckt, und wobei vorzugsweise das erste Eingriffselement von einem Außenumfang der distalen Seite beabstandet ist.

7. Aufsatz nach Anspruch 6 in Abhängigkeit von Anspruch 3, wobei der Aufsatz eine im Wesentlichen zylindrische Grundform mit einer Grundfläche, einer Deckfläche und einem Mantel, der sich von der Grundfläche zur Deckfläche erstreckt, hat, wobei die Grundfläche der proximalen Seite entspricht und die Deckfläche der distalen Seite entspricht, und wobei sich die Durchführungsöffnung von einer mittigen Position auf der distalen Seite durch den Mantel erstreckt.

8. Aufsatz nach einem der Ansprüche 3-7, wobei die Durchführungsöffnung
- eine Länge von mindestens 10 mm hat;
- eine Biegung aufweist, wobei die Biegung vorzugsweise einen Radius von 6 mm hat;
- eine Breite von mindestens 350 µm hat;
- eine Tiefe von mindestens dem halben Durchmesser des Aufsatzes, und optional plus dem halben Durchmesser der Kapillare, hat; und/oder
- in dem Abschnitt der Durchführungsöffnung, den das erste Eingriffselement aufweist, als Schlitz ausgebildet ist, der sich von einer lateralen Oberfläche des ersten Eingriffselements in Richtung zur Mittelachse des ersten Eingriffselements und optional bis zur Mittelachse des ersten Eingriffselements und/oder darüber hinaus erstreckt.

9. Aufsatz nach einem der Ansprüche 3-8, wobei die Durchführungsöffnung einen Abschnitt aufweist, der sich durch einen vom ersten Eingriffselement verschiedenen Abschnitt des Aufsatzes erstreckt.

10. Aufsatz nach einem der Ansprüche 2-9, wobei das dritte Eingriffselement ein standardisiertes Eingriffselement ist, bspw. eines der folgenden Eingriffselemente:
- ein 1/4 Zoll Innen-Vierkant
- ein 1/4 Zoll Außen-Vierkant
- ein 1/2 Zoll Innen-Vierkant
- ein 1/2 Zoll Außen-Vierkant
- ein 3/8 Zoll Innen-Vierkant
- ein 3/8 Zoll Außen-Vierkant
- ein 5/16 Zoll Innen-Vierkant
- ein 5/16 Zoll Außen-Vierkant
- ein 4-14 mm Innen-Sechskant
- ein 4-14 mm Außen-Sechskant
- ein 4-14 mm Innen-Achtkant
- ein 4-14 mm Außen-Achtkant
- ein 4-14 mm Innen-Zehnkant
- ein 4-14 mm Außen-Zehnkant
- ein 4-14 mm Innen-Zwölfkant
- ein 4-14 mm Außen-Zwölfkant
- Außen-Torx (E-Nuss)
- Innen-Torx (E-Nuss)
- ein Gewinde, bevorzugt mit einer Windung in gleicher Richtung zum Gewinde des HPLC-Kapillarenschraubkopfes;
- das dritte Eingriffselement ist Teil einer Klinge, die für den Eingriff mit einem Drehmomentschraubendrehergriff mit Drehmomentfunktion konfiguriert ist.

11. Aufsatz nach einem der vorhergehenden Ansprüche, wobei der Aufsatz, bevorzugt abschnittsweise, folgende Abmessungen aufweist:
- als Zylinder mit kreisförmiger Grundfläche und Deckfläche: einen Radius von mindestens 3,5 mm und/oder von maximal 10 mm; eine Höhe des Zylinders von mindestens 12 mm;
- als Quader (d.h. gerader Zylinder mit rechteckiger, bspw. quadratischer, Grundfläche und Deckfläche): eine Seitenlänge oder Durchmesser der Grundfläche und/oder der Deckfläche von mindestens 7 mm und/oder von maximal 20 mm; eine Höhe des Zylinders von mindestens 12 mm;
- als gerader Zylinder mit sechseckiger Grundfläche und Deckfläche: eine Seitenlänge der Grundfläche und/oder der Deckfläche von mindestens 3,5 mm und/oder maximal 10 mm; ein Durchmesser der Grundfläche und/oder der Deckfläche von 7 mm bis 20 mm; eine Höhe des Sechskant-Zylinders von mindestens 12 mm; und/oder
- als gerader Zylinder mit achteckiger Grundfläche und Deckfläche: eine Seitenlänge der Grundfläche und/oder der Deckfläche von mindestens 2,9 mm und/oder maximal 8,5 mm; ein Durchmesser der Grundfläche und/oder der Deckfläche von 7 mm bis 20 mm; eine Höhe des Achtkant-Zylinders von mindestens 12 mm.

12. Aufsatz nach einem der vorhergehenden Ansprüche mit integrierter Drehmomentfunktion.

13. Set, das aufweist:
- einen Aufsatz nach einem der vorhergehenden Ansprüche; und
- ein kompatibles Drehmomentwerkzeug.

14. Drehmomentwerkzeug mit integriertem Aufsatz nach einem der vorhergehenden Ansprüche ohne Anspruch 13.

15. Verfahren zum Montieren einer HPLC-Kapillare mit einem HPLC-Kapillarenschraubkopf mittels eines kompatiblen Aufsatzes nach einem der vorhergehenden Ansprüche an einem zum HPLC-Kapillarenschraubkopf kompatiblen Gegenstück, das folgende Schritte aufweist:
- Aufsetzen des Aufsatzes auf den HPLC-Kapillarenschraubkopf;
- Aufsetzen eines Drehmomentwerkzeugs auf den Aufsatz;
- Anziehen des HPLC-Kapillarenschraubkopfes, wobei während des Anziehens ein vorgesehenes Anzugsmoment im Drehmomentwerkzeug eingestellt ist.
